# EUROPEAN PATENT APPLICATION

(11) **EP 4 273 394 A1**
(43) Date of publication of application: **08.11.2023**
(21) Application number: 23171443.7
(22) Date of filing: 04.05.2023
(51) Int. Cl.: F03D 3/00, F03D 3/04, F03D 9/34, F03D 9/00

(54) **WIND TURBINE UNIT**

(30) Priority: 04.05.2022 FI 20225381
(71) Applicant: Sunstorm Oy, 07220 Kaarenkylä (FI)
(72) Inventor: SUNDSTRÖM, Lasse, 07220 Kaarenkylä (FI)
(74) Representative: Berggren Oy

(57) **Abstract**

Wind turbine unit (1, 1'), which unit comprises a frame (2), a wind turbine (7) with a plurality of wings connected rotatably to the frame, wherein the frame comprises a plurality of inlet openings opening to different directions with surfaces (5a-5d, 8a, 8b, 9a-9d) for guiding wind to the wind turbine, wherein side surface or surfaces of the unit extending in the direction of rotational axis of the wind turbine (7) comprise inlet openings, from which inlet openings primary inlet tunnels extend towards the wind turbine, which primary inlet tunnels are divided to a plurality of secondary inlet tunnels before the inlet tunnels reach the wind turbine, wherein the cross-sectional area of the primary and secondary inlet tunnels decreases towards the wind turbine, and the surfaces (8a, 8b, 9a-9d) of the secondary inlet tunnels are also configured to guide and direct the wind entering to the inlet tunnels on one side of the wind turbine in relation to the rotational axis of the wind turbine.

## Description

The present invention relates to a wind turbine unit, which unit can be installed on a roof of a building, for example.

Several different wind turbine units are known. Publication KR 101060156 B1 discloses a hybrid system for a roof of a building for generating electricity. The hybrid system comprises a rotary fan connected to a generator with a vertical shaft, and a solar power generating unit.

Publication EP 3786445 A1 discloses a wind turbine device for recovering wind power for a building, which comprises a casing that can be installed on a roof of a building, and a turbine connected to the frame with a horizontal axis of rotation. The casing comprises an inlet opening for guiding wind to the turbine.

The present invention provides a compact wind turbine unit, which is easy and simple to install, and which can utilize wind from any and all directions for power generation effectively. Further, the present invention allows effective utilization of the venturi effect in the provision of wind power for the wind turbine of the unit.

The wind turbine unit of the invention comprises a frame, a wind turbine with a plurality of wings connected rotatably to the frame, wherein the frame comprises a plurality of inlet openings opening to different directions with surfaces for guiding wind to the wind turbine, and wherein side surface or surfaces of the unit extending in the direction of rotational axis of the wind turbine comprise inlet openings, from which inlet openings primary inlet tunnels extend towards the wind turbine, which primary inlet tunnels are divided to a plurality of secondary inlet tunnels before the inlet tunnels reach the wind turbine, and the cross-sectional area of the primary and secondary inlet tunnels decreases towards the wind turbine.

In the present invention the surfaces of the secondary inlet tunnels are also configured to guide and direct the wind entering to the inlet tunnels on one side of the wind turbine in relation to the rotational axis of the wind turbine, thus providing and supporting the rotation of the wind turbine.

In an embodiment of the wind turbine unit of the invention the outer surface of the unit opposite of the fixing surface of the unit is equipped with at least one solar panel. This allows provision of additional energy from sunlight.

In an embodiment of the wind turbine unit of the invention at least part of the side surfaces of two adjacent primary inlet tunnels are formed with a single piece, which piece is fixed hinged and spring-loaded to the frame of the wind turbine unit allowing the piece to move under wind force exceeding the spring-loading force. This allows guiding a portion of the wind entering the wind turbine unit to pass the wind turbine, which can protect the wind turbine and the unit in storms and strong winds.

In an embodiment of the wind turbine unit of the invention the amount of inlet openings is four or more. This allows utilization of wind from various different directions for energy generation.

In an embodiment of the wind turbine unit of the invention the inlet openings cover substantially all of the side surfaces of the unit extending in the direction of the rotational axis of the wind turbine.

In an embodiment of the with turbine unit of the invention at least some, preferably all, of the inlet openings of the unit are covered with a net or nets. The net may be a metal net, or a net made from other suitable material. The net or nets effectively protects the wind turbine from objects picked up by wind and prevents insertion of objects and/or limbs inside the wind turbine unit, as well as prevents birds from getting in the wind turbine, for example.

More precisely the features defining a wind turbine unit in accordance with the present invention are presented in claim 1. Dependent claims present advantageous features and embodiments of the invention.

Exemplifying embodiment of the invention and its advantages are explained in greater detail below in the sense of example and with reference to accompanying drawings, where
Figure 1 shows schematically an embodiment of the wind turbine unit of the invention,
Figures 2 and 3 illustrate schematically the inner structure of the embodiment of figure 1, and
Figure 4 shows schematically an alternative embodiment of the wind turbine of the invention installed on a roof of a building.

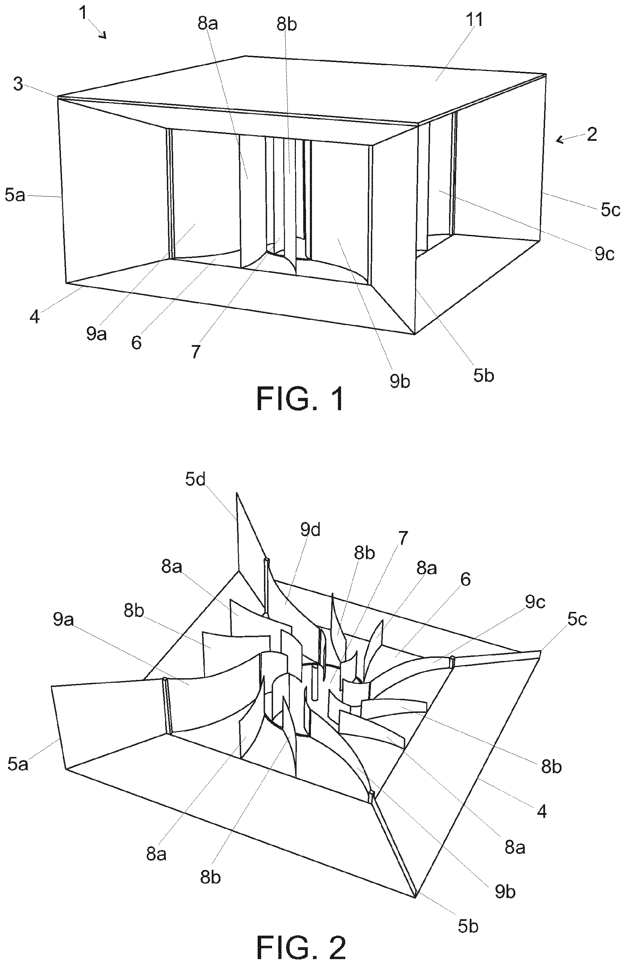

Figure 1 shows a wind turbine unit 1 in accordance with the present invention.

The wind turbine unit 1 comprises a frame 2 with upper and lower part 3 and 4, which upper and lower part have a square shaped outer surface in this embodiment. The upper and lower part 3 and 4 is connected to each other with plates 5a-5d, extending from the corners of the upper and lower surfaces a distance towards the center of the frame 2. A wind turbine 7 is connected between the upper and lower part 3 and 4 at the center of the frame 2 rotatably around a vertical axis, which vertical axis is perpendicular in relation to the outer surfaces of the upper and lower part.

On the area of the outer surface of the upper part 3 is preferably installed one or more solar panels 11, which allows additional electrical energy to be obtained with the wind turbine unit 1 of the present invention.

The outer edges of the plates 5a-5d together with the outer edges of the upper and lower part 3 and 4 define inlet openings of the wind turbine unit 1.

The inner ends of the plates 5a-5d define an inner area 6 inside the frame 2, which inner area has smaller height than between the height of the frame 2, i.e. the inner upper surface of the lower part 4 and the inner lower surface of the upper part 3 restricting the inner area are substantially closer to each other than the outer surfaces of the upper and lower part. This allows the surfaces of the upper and lower part 3 and 4 leading from the outer edges of these parts to the edges of the inner area 6 to be formed slanted.

The required electrical control components of the wind turbine unit 1 are located in the spaces inside the upper and lower part 3 and 4, so that the unit comprises all the electronics required for its operation and can be simply plugged or connected with an electrical connection in an electric network of a building for additional electrical energy provision.

The inner space of the upper part 3 preferably comprises a generator connected to the shaft of the wind turbine 7, inverters for the collected wind and sun energy, a control unit for controlling the operation of the wind turbine unit 1 based on various sensors following the operation of the wind turbine unit and for forwarding the information out of the unit, sensor for measuring rotational speed of the wind turbine, sensor for measuring wind speed, sensor for defining the direction of wind, sensor for measuring produced electricity and bearings for the shaft of the wind turbine, for example. The wind turbine unit 1 may also comprise one or more cameras for following the operation of the wind turbine unit.

The inner space of the lower part 4 preferably comprises a support structure with bearings to support the wind turbine in vertical direction as well as bearings supporting the wind turbine shaft in lateral directions, for example. The inner space of the lower part 4 may also comprise vibration dampeners and batteries for storing electrical energy, for example.

The surfaces of the plates 5a-5d and the slanted surfaces of the upper and lower part 3 and 4 form the primary inlet tunnels extending from the inlet openings inside the frame 2 to the edge of the inner area 6.

The inner area 6 of the frame 2 is equipped with a plurality of surfaces or wings 8a and 8b as well as wings 9a-9d, which are more clearly illustrated in figure 2. The wings 8a, 8b and 9a-9d divide each of the primary wind tunnels to a plurality of secondary wind tunnels in the inner area 6.

In this embodiment the plates 5a-5d are connected to the frame 2 of the wind turbine unit 1 from or close to their front ends, ie. close to the inlet openings. This connection is formed with spring-loaded hinges, which allow movement of the plates 5a-5d, especially the rear ends of the plates in high winds and storms, for example. When the wind forces the plates 5a-5d to move, the displacement of the rear ends of the plates allows portion of the wind to entering the narrowing inlet tunnels, which slows the rotational speed of the wind turbine at high wind speeds. This protects the wind turbine unit of the invention in storms, for example.

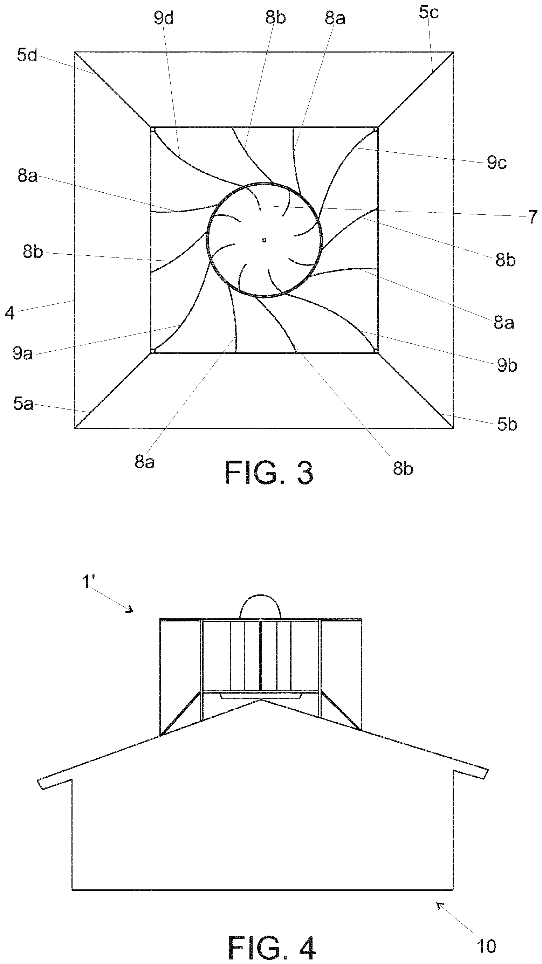

Figure 3 illustrates the form and shaping of the inlet tunnels of the wind turbine unit 1 formed with the plates 5a-5d and plates 8a, 8b and 9a-9d on top of the lower part 4 as viewed from above. In the center of the lower part 4 is the wind turbine 7.

As can be seen from figure 3, the primary inlet tunnels formed with plates 5a-5d, and the secondary inlet tunnels formed with plates 8a, 8b and 9a-9d narrow towards the wind turbine, which causes the wind in the inlet tunnels to speed up before entering the wind turbine 7. The plates 8a, 8b and 9a-9d are formed curved as can be seen from the figure 3, which curved shape allows guiding and directing the wind to one side of the wind turbine 7 and eliminates turbulence and whirling of the wind in the secondary inlet tunnels.

The speed of the wind entering to the primary inlet tunnel is further speeded up with the slanted inner surfaces of the upper and lower part 3 and 4.

Figure 4 shows an embodiment of the wind turbine unit 1' installed on a roof of a building 10.

The wind turbine unit 1' of figure 4 is configured to be installed on a gabled roof of the building 10 and differs from the previously discussed embodiment in that the lower edges of the primary inlet tunnels of the wind turbine unit 1' are lowered to the roof surface on both sides of the tip of the roof. This way the roof surface can be utilized in collecting and directing wind towards the wind turbine unit.

The wind turbine unit 1, 1' of the present invention can utilize wind from any direction for energy production, together with sunlight.

The embodiments discussed above provide a wind turbine unit with a compact structure, which allows maximal utilization of the surfaces of the unit for energy production. Further, the compact and dense structure of the wind turbine unit allows maximal utilization of wind energy and venturi effect inside the unit.

The wind turbine units of the present invention can also be installed as a pile, i.e. a plurality of wind turbine units in top of each other. In this installation the solar panel or panels are located only on the outer surface of the upper part of the topmost wind turbine unit.

The inlet openings of the wind turbine unit or units may also be covered with suitable nets to protect the wind turbine from objects entering or inserted inside the wind turbine unit. The nets also prevent insertion of limbs inside the wind turbine unit and thus increases the safety of the wind turbine unit(s) of the invention. The nets, however, typically also reduces the amount of power obtained.

The specific exemplifying embodiment of the invention shown in figures and discussed above should not be construed as limiting. A person skilled in the art can amend and modify the embodiment described in many evident ways within the scope of the attached claims. Thus, the invention is not limited merely to the embodiment described above.

## Claims

1. Wind turbine unit (1, 1'), which unit comprises a frame (2), a wind turbine (7) with a plurality of wings connected rotatably to the frame, wherein the frame comprises a plurality of inlet openings opening to different directions with surfaces (5a-5d, 8a, 8b, 9a-9d) for guiding wind to the wind turbine, **characterized in that**
- side surface or surfaces of the unit extending in the direction of rotational axis of the wind turbine (7) comprise inlet openings,
- from which inlet openings primary inlet tunnels extend towards the wind turbine, which primary inlet tunnels are divided to a plurality of secondary inlet tunnels before the inlet tunnels reach the wind turbine,
- that the cross-sectional area of the primary and secondary inlet tunnels decreases towards the wind turbine, and
- the surfaces (8a, 8b, 9a-9d) of the secondary inlet tunnels are also configured to guide and direct the wind entering to the inlet tunnels on one side of the wind turbine in relation to the rotational axis of the wind turbine.

2. Wind turbine unit (1, 1') of claim 1, wherein the outer surface of the unit opposite of the fixing surface of the unit (1, 1') is equipped with at least one solar panel (11).

3. Wind turbine unit (1, 1') of claim 1 or 2, wherein at least part of the side surfaces of two adjacent primary inlet tunnels are formed with a single piece (5a-5d), which piece is fixed hinged and spring-loaded to the frame (2) of the wind turbine unit (1, 1') for allowing the piece to move under wind force exceeding the spring-loading force.

4. Wind turbine unit (1, 1') of any of claims 1-3, wherein the amount of inlet openings is four or more.

5. Wind turbine unit (1, 1') of any of claims 1-4, wherein the inlet openings cover substantially all of the side surfaces of the unit extending in the direction of the rotational axis of the wind turbine (7).

6. Wind turbine unit (1, 1') of any of claims 1-5, wherein at least some of the inlet openings of the unit (1, 1') are covered with a net or nets.
